# EUROPEAN PATENT APPLICATION

(11) **EP 4 737 046 A1**
(43) Date of publication of application: **06.05.2026**
(21) Application number: 25190767.1
(22) Date of filing: 21.07.2025
(51) Int. Cl.: B23K 20/10

(54) **ULTRASONIC WELDING DEVICE AND METHOD FOR MANUFACTURING SECONDARY BATTERY USING ULTRASONIC WELDING DEVICE**

(30) Priority: 01.11.2024 KR 20240153141
(71) Applicant: Samsung SDI Co., Ltd., Yongin-si, Gyeonggi-do 17084 (KR)
(72) Inventor: SEO, Ye Jin, Yongin-si, Gyeonggi-do 17084 (KR); KIM, Dong Hyun, Yongin-si, Gyeonggi-do 17084 (KR); MOON, Eun Jeong, Yongin-si, Gyeonggi-do 17084 (KR)
(74) Representative: Bardehle Pagenberg Partnerschaft mbB Patentanwälte Rechtsanwälte

(57) **Abstract**

An ultrasonic welding device according to an embodiment of the present disclosure comprises: an anvil that supports a welding target from below; and a welding horn disposed on the welding target and having a body, at least one pair of heads provided on one end of the body, and a plurality of welding knurls provided on one-side surfaces of the heads, wherein the positions of the heads in primary welding of the welding target and the positions of the heads in secondary welding are different from each other. According to the embodiment of the present disclosure, since a welding area between substrate tabs and a welding area between a substrate tab and a lead tab do not overlap, damage such as breakage or perforation of a welding portion can be prevented. Accordingly, the adhesion between the substrate tabs, and the cutting uniformity of substrate tabs can be improved. In addition, strip terminals can be welded on the uniform surfaces of the substrate tabs, thereby improving welding quality.

## Description

The present application claims priority to and the benefit of Korean Patent Application No. 10-2024-0153141 filed on November 1, 2024, the entire contents of which is incorporated by reference.

### BACKGROUND

### 1. Field

The present disclosure relates to an ultrasonic welding device and a method for manufacturing a secondary battery using the ultrasonic welding device.

### 2. Description of the Related Art

Unlike a primary battery, a secondary battery may be charged and discharged. Low-capacity secondary batteries having a single battery cell packaged in the form of a pack are widely employed in small, portable electronic devices, such as smart phones, feature phones, laptop computers, digital cameras, camcorders, and the like, while large-capacity secondary batteries are widely used as power sources for driving motors in hybrid vehicles, electric vehicles, and the like, as well as batteries for power storage. The secondary battery includes an electrode assembly consisting of a positive electrode and a negative electrode, a case that accommodates the electrode assembly, and electrode terminals connected to the electrode assembly.

An ultrasonic welding device can for example be used for welding between multiple substrate tabs of a secondary battery and welding between a substrate tab and a strip terminal. An ultrasonic welding device may perform welding by applying heat and pressure to a welding target while the welding target is placed on an anvil and the welding target is pressed by a welding horn in which a welding knurl protrudes. Typically, multiple substrate tabs are welded and strip terminals are then welded again, and breakage may occur at portions where welding portions overlap.

The above information disclosed in this Background section is only for enhancement of understanding of the background of the invention and therefore it may contain information that does not constitute prior art.

### SUMMARY

Embodiments of the present disclosure provide an ultrasonic welding device capable of preventing damage or breakage of welding portions by preventing overlapping of the welding portions during ultrasonic welding, and a method for manufacturing a secondary battery using the ultrasonic welding device.

However, the technical problems to be achieved in the embodiment of the disclosure are not limited to the technical problems mentioned above, and other technical problems not mentioned herein will be clearly understood from the following description by those skilled in the art to which the disclosure belongs.

Embodiments of the present disclosure provide an ultrasonic welding device for a secondary battery that may include: an anvil configured to support a welding target; and a welding horn configured to be disposed on the welding target, the welding horn including: a body; a pair of heads disposed on one end of the body; and a plurality of welding knurls that may be disposed on a surface of each of the pair of heads, wherein each of the pair of heads, upon primary welding of the welding target, is in a first position, wherein each of the pair of heads, upon secondary welding of the welding target, is in a second position, and wherein the first position and the second position are different from each other.

In some embodiments, each of the (pair of) heads may be detachable or movable from the body.

In some embodiments, a distance between each of the pair of heads in the first position may be greater than that in the second position.

In some embodiments, each of the pair of heads may include a coupling part, and wherein the body may comprise an insertion part.

In some embodiments, the welding horn may be provided in a pair, and each welding horn may have one head.

In some embodiments, a distance between each welding horn in the first position may be greater than that in the second position.

In some embodiments, a primary welding portion and a secondary welding portion may not overlap with each other.

In some embodiments, the secondary welding portion may be disposed between any two of the primary welding portion.

In some embodiments, the primary welding portion and the secondary welding portion may be each provided in an even number.

Embodiments of the present disclosure provide a method for manufacturing a secondary battery using an ultrasonic welding device, the method including: welding, using the ultrasonic welding device, a negative electrode substrate tab of a negative electrode plate of an electrode assembly of the secondary battery to a first strip terminal electrically connected to the negative electrode substrate tab, and a positive electrode substrate tab of a positive electrode plate of the electrode assembly to a second strip terminal electrically connected to the positive electrode substrate tab.

In some embodiments, the welding may comprise primary welding between a plurality of the negative electrode substrate tab and between a plurality of the positive electrode substrate tab.

In some embodiments, the welding may further comprise secondary welding between the primarily welded plurality of the negative electrode substrate tab and the first strip terminal and/or between the primarily welded plurality of the positive electrode substrate tab and the second strip terminal.

In some embodiments, the primary welding may be performed on the negative electrode substrate tab and/or the positive electrode substrate tab.

In some embodiments, the secondary welding may be performed on the first strip terminal welded to the negative electrode substrate tab and/or on the second strip terminal welded to the positive electrode substrate tabs.

In some embodiments, an X-axis width of the negative electrode substrate tab and/or an X-axis width of the positive electrode substrate tab may be each greater than an X-axis width of the first strip terminal or the second strip terminal.

In some embodiments, a primary welding portion and a secondary welding portion may not overlap with each other.

In some embodiments, the secondary welding portion may be disposed between any two of the primary welding portion.

In some embodiments, the primary welding portion and the secondary welding portion may be arranged at both ends in an X-axis direction of the negative electrode substrate tab and the positive electrode substrate tab.

In some embodiments, any two of the primary welding portion may be spaced apart from each other in a Y-axis direction of the negative electrode substrate tab and the positive electrode substrate tab.

In some embodiments, the primary welding portion and the secondary welding portion may be each provided in an even number.

A secondary battery according to an embodiment of the present disclosure may include: an anvil that supports a welding target from below; and a welding horn disposed on the welding target and having a body, at least one pair of heads provided on one end of the body, and a plurality of welding knurls provided on one-side surfaces of the heads, wherein the positions of the heads in primary welding of the welding target and the positions of the heads in secondary welding are different from each other.

The heads may be provided to be detachable or movable from the body.

During the primary welding, the heads may move away from each other, and during the secondary welding, the heads may come into close contact with each other.

The heads may be provided with coupling parts, and the body may be provided with insertion parts.

The welding horn may be provided in pair, and one head may be provided for each welding horn.

During the primary welding, the welding horn may move in a direction in which the heads move away from each other, and during the secondary welding, the welding horn may move so that the heads come into close contact with each other.

Primary welding portions according to the primary welding and secondary welding portions according to the secondary welding may not overlap each other.

The secondary welding portions may be provided between the primary welding portions.

The primary welding portions and the secondary welding portions may be each provided in an even number.

In addition, a secondary battery manufactured by the ultrasonic welding device may be provided according to the present disclosure, wherein the secondary battery may comprise: an electrode assembly having a negative electrode plate having a plurality of negative electrode substrate tabs, a positive electrode plate having a plurality of positive electrode substrate tabs, and a separator interposed between the negative electrode plate and the positive electrode plate; a pair of strip terminals electrically connected to the negative electrode substrate tabs and the positive electrode substrate tabs, respectively, wherein the negative electrode substrate tabs and the positive electrode substrate tab are welded to the strip terminals for example by the ultrasonic welding device as described herein.

Primary welding may be welding between multiple negative electrode substrate tabs and between multiple positive electrode substrate tabs.

Secondary welding may be welding between the primarily welded negative electrode substrate tabs and the strip terminals and between the positive electrode substrate tabs and the strip terminals.

Primary welding portions according to the primary welding may be provided on the negative electrode substrate tabs and the positive electrode substrate tabs, respectively.

Secondary welding portions according to the secondary welding may be provided on the strip terminals welded to the negative electrode substrate tabs and on the strip terminals welded to the positive electrode substrate tabs, respectively.

The X-axis widths of the negative electrode substrate tabs and the positive electrode substrate tabs may be larger than those of the strip terminals.

The primary welding portions and the secondary welding portions may not overlap each other.

The secondary welding portions may be provided between the primary welding portions.

The primary welding portions may be arranged at both ends in the X-axis direction of the negative electrode substrate tabs and the positive electrode substrate tabs.

The primary welding portions may be spaced apart from each other in the Y-axis direction of the negative electrode substrate tabs and the positive electrode substrate tabs.

The primary welding portions and the secondary welding portions may be each provided in an even number.

According to the embodiment of the present disclosure, since welding between substrate tabs is performed first, the adhesion between substrate tabs and the cutting uniformity of the substrate tabs can be improved. Accordingly, strip terminals can be welded to the uniform surfaces of the substrate tabs, and thus can improve welding quality.

In addition, since a welding area between substrate tabs and a welding area between a substrate tab and a lead tab do not overlap, damage such as breakage or perforation of a welding portion can be prevented.

The technical effects to be achieved in the embodiment of the disclosure are not limited to the technical problems mentioned above, and other technical effects not mentioned herein will be clearly understood from the following description by those skilled in the art to which the disclosure belongs.

### BRIEF DESCRIPTION OF DRAWINGS

The following drawings attached to this specification illustrate preferred embodiments of the present disclosure, and serve to further understand the technical idea of the present disclosure together with the detailed description of the present disclosure, and thus, the present disclosure should not be construed as being limited to the matters described in such drawings.
FIG. 1 is a schematic diagram of an ultrasonic welding device according to embodiments of the present disclosure.
FIG. 2 is a plan view of a welding horn according to embodiments of the present disclosure.
FIG. 3 is a front view showing a welding horn at a first welding position according to embodiments of the present disclosure.
FIG. 4 is a front view showing a welding horn at a second welding position according to embodiments of the present disclosure.
FIG. 5 is a front view showing a welding horn at a first welding position according to embodiments of the present disclosure.
FIG. 6 is a front view showing a welding horn at a second welding position according to embodiments of the present disclosure.
FIG. 7 is a schematic diagram showing a welding portion at a first welding position of a welding horn according to embodiments of the present disclosure.
FIG. 8 is a plan view showing a first welding portion according to FIG. 7 according to embodiments of the present disclosure.
FIG. 9 is a schematic diagram showing a welding horn moving from a first welding position to a second welding position according to embodiments of the present disclosure.
FIG. 10 is a front view showing a welding portion at a second welding position of a welding horn according to embodiments of the present disclosure.
FIG. 11 is a plan view showing a second welding portion according to embodiments of the present disclosure.
FIG. 12 is a plan view showing a first welding portion according to embodiments of the present disclosure.
FIG. 13 is a plan view showing a second welding portion according to embodiments of the present disclosure.
FIG. 14 is a plan view showing a first welding portion according to embodiments of the present disclosure.
FIG. 15 is a plan view showing a second welding portion according to embodiments of the present disclosure.
FIG. 16 is a perspective view showing a secondary battery manufactured by an ultrasonic welding device according to embodiments of the present disclosure.

### DETAILED DESCRIPTION

Hereinafter, embodiments of the present disclosure will be described, in detail, with reference to the accompanying drawings. The terms or words used in the present specification and claims are not to be limitedly interpreted as general or dictionary meanings and should be interpreted as meanings and concepts that are consistent with the technical idea of the present disclosure on the basis of the principle that an inventor can be his/her own lexicographer to appropriately define concepts of terms to describe his/her invention in the best way. Therefore, the embodiments described in this specification and the configurations shown in the drawings are only some of the embodiments of the present disclosure and do not represent all of the technical spirit, aspects, and features of the present disclosure. Accordingly, it should be understood that there may be various equivalents and modifications that can replace or modify the embodiments described herein at the time of filing this application.

In addition, it will be understood that the terms "comprise or include" and/or "comprising or including," when used in this specification, specify the presence of stated features, integers, steps, operations, elements, and/or components but do not preclude the presence or addition of one or more other features, integers, steps, operations, elements, components, and/or groups thereof.

In addition, for a better understanding of the invention, the attached drawings are not drawn to scale and the dimensions of some components may be exaggerated. In addition, the same reference numbers may be assigned to the same components in different embodiments.

A reference to two objects in comparison being the same means that they are substantially the same. Thus, the wording "substantially the same" may include cases where the same is considered to be a low level in the related art, for example, a deviation within 5%. In addition, when any of parameters is referred to as being uniform in a given region, it may mean that the parameter is uniform from an average perspective.

It will be understood that, although the terms "first," "second," "third," etc., may be used herein to describe various components, these components should not be limited by these terms. These terms are used to distinguish one component from another component. Thus, unless otherwise defined, a first component described below could be termed a second component, without departing from the spirit and scope of the present disclosure.

Throughout the specification, the singular forms are intended to include the plural forms as well, unless the context clearly indicates otherwise.

The arrangement of an arbitrary component on the "upper portion (or lower portion)" or "upper (or lower)" of a component means that an arbitrary component is placed in contact with the upper (or lower) surface of the component. In addition, it may mean that other components may be interposed between the component and any component disposed on (or under) the component.

Also, it will be understood that when an element is referred to as being "coupled to," "linked to," or " "connected to" another element, these elements can be directly coupled or connected to each other, another intervening element may be present therebetween, or the respective elements may be coupled, linked, or connected to each other through another elements. In addition, it will be understood that when an element is referred to as being electrically coupled to another element, the element can be directly connected to another element or an intervening element may be present therebetween such that the element and another element are indirectly connected to each other.

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

The terminology used herein is for the purpose of describing particular embodiments only and is not intended to be limiting of the present disclosure.

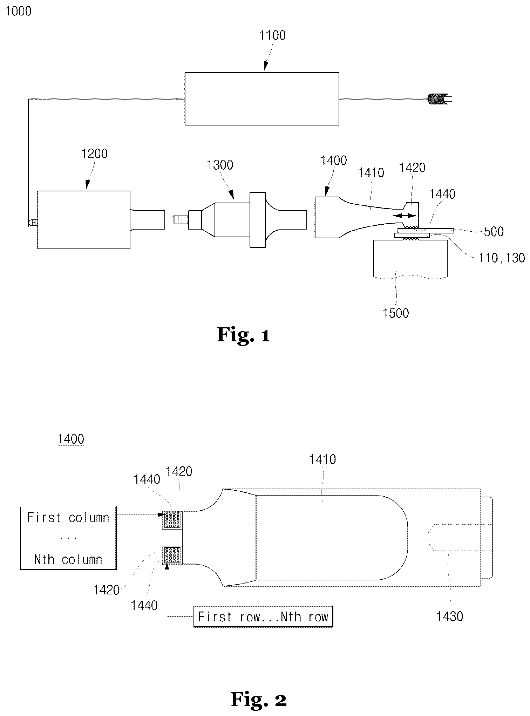

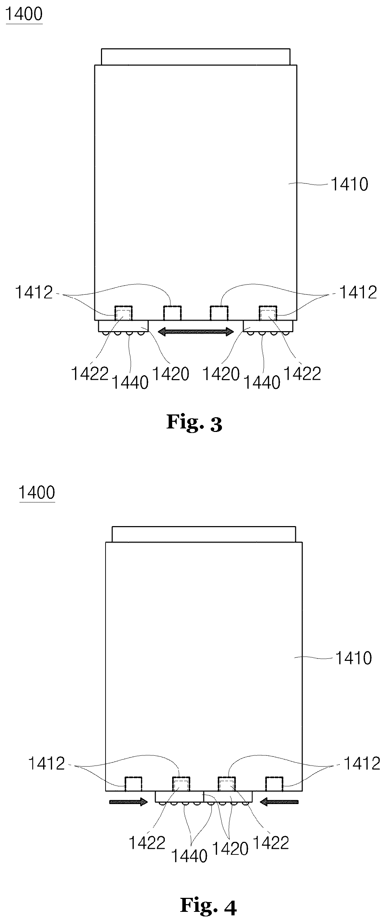

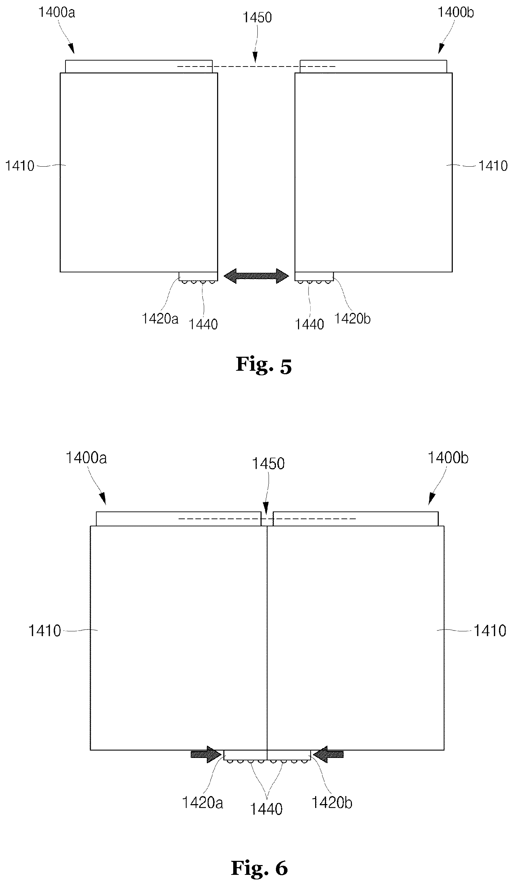

FIG. 1 is a schematic diagram of an ultrasonic welding device according to embodiments of the present disclosure. FIG. 2 is a plan view of a welding horn according to embodiments of the present disclosure. FIG. 3 is a front view showing a welding horn at a first welding position according to embodiments of the present disclosure. FIG. 4 is a front view showing a welding horn at a second welding position according to embodiments of the present disclosure. FIG. 5 is a front view showing a welding horn at a first welding position according to embodiments of the present disclosure. FIG. 6 is a front view showing a welding horn at a second welding position according to embodiments of the present disclosure.

Referring to FIG. 1, the exemplary ultrasonic welding device 1000 may include an ultrasonic controller 1100, a vibrator 1200, a booster 1300, a welding horn 1400, and an anvil 1500.

The ultrasonic controller 1100 converts or generates ultrasonic waves at a frequency required for welding. The vibrator 1200, also referred to as a converter, converts electrical energy into mechanical energy. The booster 1300 amplifies the amplitudes of the ultrasonic waves. The welding horn 1400 secondarily amplifies the amplitudes of the ultrasonic waves and transmits the same to a welding target. The anvil 1500 fixes and supports the welding target. The welding horn 1400 is placed above the welding target, and the anvil 1500 is placed below the welding target. The components other than the welding horn 1400 may adopt known structures.

Referring to FIGS. 2 to 4, the welding horn 1400 may include a body 1410, heads 1420, a connector 1430, and a plurality of welding knurls 1440.

The body 1410 may have a polyhedron geometry, such as a cylinder or a hexahedron geometry. The heads 1420 may be disposed at one end of the body 1410, and the connector 1430 may be disposed at the other end of the body 1410. In some embodiments, the connector 1430 may be disposed on the interior of the body 1410 and not exposed to the exterior. The booster 1300 may be coupled to the connector 1430. In some embodiments, the end width of the body 1410 at the connector side may be the greatest, and the end width of the body 1410 at the head side may be the least. However, the shape of the body 1410 is not limited to that disclosed herein. The body 1410 may vibrate in the direction of the arrow shown in FIG. 1 (in the longitudinal direction of the body) during ultrasonic welding.

When viewed from the lateral side, the head 1420 may have a polyhedral geometry with portions of the upper and lower surfaces having a flat geometry. The head 1420 may be integral with the body 1410 or may be separate from the body 1410. The plurality of welding knurls 1440 may be disposed on one-side surfaces of the heads 1420. For convenience, the direction in which the welding knurls 1440 are provided is defined as the lower surface of the head 1420. In some embodiments, the head 1420 may be provided as a pair. The size of the head 1420 may vary depending on the size of the welding target.

Coupling parts 1422 for attachment to and detachment from the body 1410 may be disposed on the upper surfaces of the heads 1420. Insertion parts 1412 may be disposed on the body 1410 corresponding to the coupling parts 1422. In some embodiments, if the coupling parts 1422 are protrusions, the insertion parts 1412 may be provided as grooves corresponding to the shapes of the protrusions. In some embodiments, if the coupling parts 1422 are in forms of bolts with threads, the insertion parts 1412 may be in forms of nuts with threads. Although not shown, the insertion parts may be provided in the form of a rail, and the coupling parts may be shaped to slidably move on the rail. That is, if the coupling parts 1422 and the insertion parts 1412 are coupled to or separated from each other or the coupling parts 1422 are movable on the insertion parts 1412, the coupling parts 1422 and the insertion parts 1412 may be implemented in any form. The welding knurls 1440 may protrude from the lower surfaces of the heads 1420.

The welding knurls 1440 may be referred to as tips, protrusions, points, nodal points, etc. The welding knurls 1440 may be arranged in multiple rows and columns. Depending on the size of the welding target, the numbers of rows and columns, arrangement, and sizes of welding knurls 1440 may vary.

Referring to FIGS. 5 and 6, the welding horn 1400a, 1400b may be provided as a pair. Each welding horn 1400a, 1400b may include one head 1420a, 1420b. Although not shown, the welding horns 1400a and 1400b and the heads 1420a and 1420b, respectively, may be coupled to each other by the same coupling parts and insertion parts. The pair of welding horns 1400a and 1400b may have structures symmetrical to each other. In some embodiments, the pair of welding horns 1400a and 1400b may be provided with the heads 1420a and 1420b, respectively, at one-side ends adjacent to each other. Therefore, when the pair of welding horns 1400a and 1400b are pressed against each other, the respective heads 1420a and 1420b may also be pressed against each other. Conversely, if the pair of welding horns 1400a and 1400b move away from each other, the respective heads 1420a and 1420b may also move away from each other. In some embodiments, the pair of welding horns 1400a and 1400b may be provided with a connecting member 1450 connecting the other-side ends thereof adjacent to each other.

The connecting member 1450 may connect the pair of welding horns 1400a and 1400b to prevent separation from each other when the welding horns 1400a and 1400b move away from each other. When brought into close contact with each other, the welding horns 1400a and 1400b may maintain a close contact state. In some embodiments, the connecting member 1450 may be in the form of a rail so as to slidably support the pair of welding horns 1400a and 1400b. In some embodiments, the connecting member 1450 may be in the form of a simple bar that can be inserted into or separated from the pair of welding horns 1400a and 1400b. In some embodiments, the connecting member 1450 may be in the form of a cylinder, the length of which increases or decreases by hydraulic or pneumatic pressure. That is, if the pair of welding horns 1400a and 1400b can be brought into close contact with or separated from each other, the connecting member 1450 may be implemented in any form.

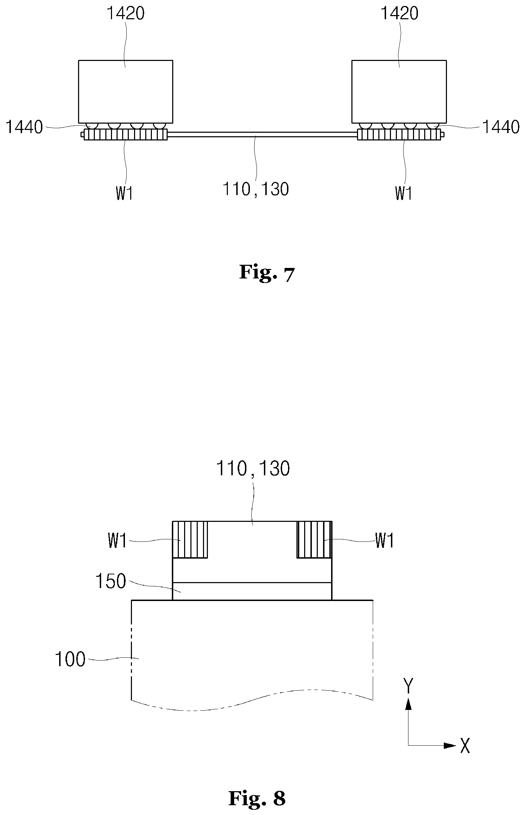

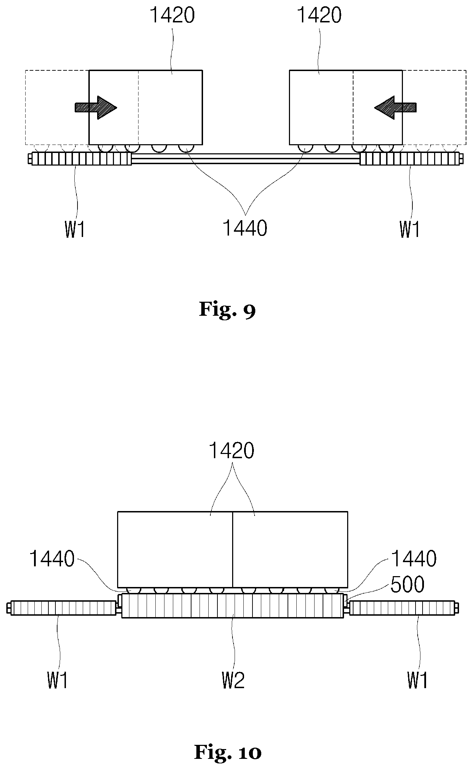

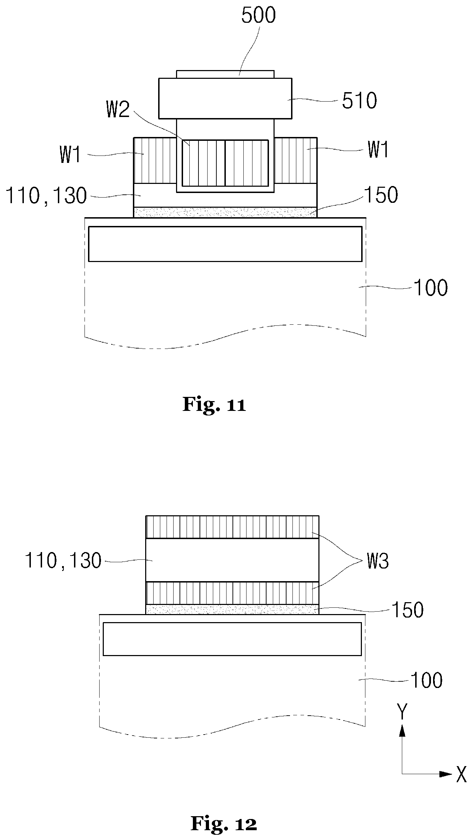

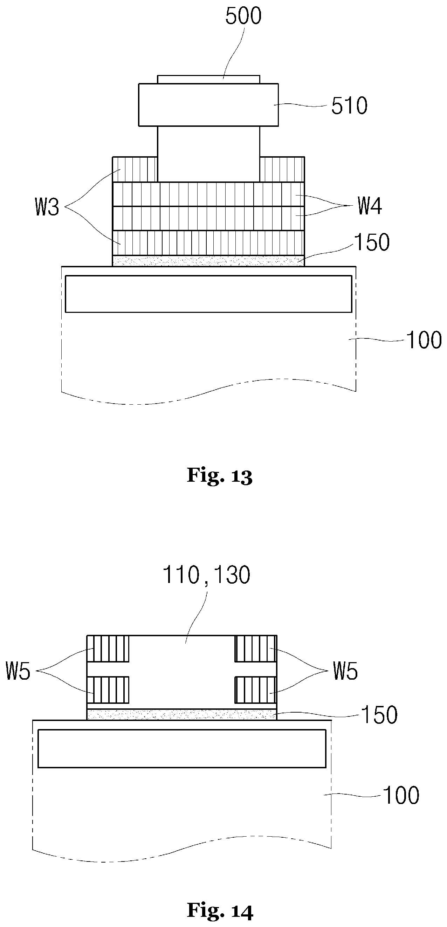

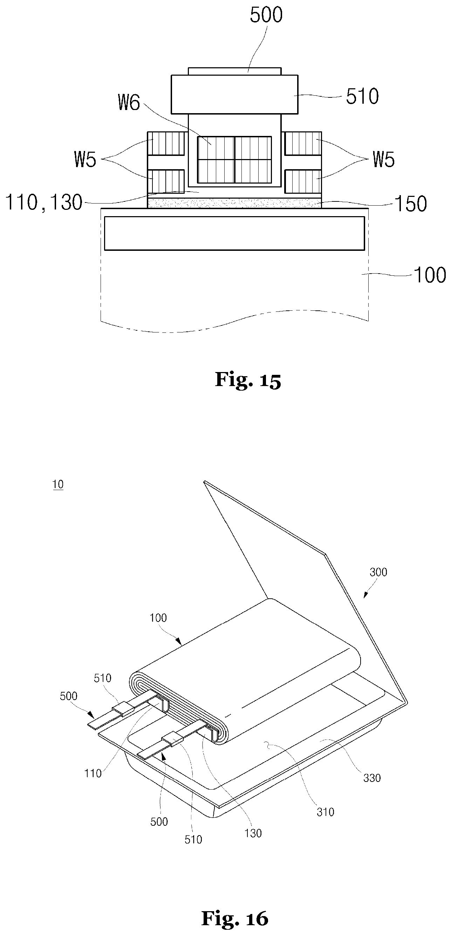

FIG. 7 is a schematic diagram showing a welding portion at a first welding position of a welding horn according to embodiments of the present disclosure. FIG. 8 is a plan view showing a first welding portion according to FIG. 7 according to embodiments of the present disclosure. FIG. 9 is a schematic diagram showing a welding horn moving from a first welding position to a second welding position according to embodiments of the present disclosure. FIG. 10 is a front view showing a welding portion at a second welding position of a welding horn according to embodiments of the present disclosure. FIG. 11 is a plan view showing a second welding portion according to embodiments of the present disclosure. FIG. 12 is a plan view showing a first welding portion according to embodiments of the present disclosure. FIG. 13 is a plan view showing a second welding portion according to embodiments of the present disclosure. FIG. 14 is a plan view showing a first welding portion according to embodiments of the present disclosure. FIG. 15 is a plan view showing a second welding portion according to embodiments of the present disclosure.

In some embodiments, a welding target welded by the ultrasonic welding device 1000 may be a pouch-type secondary battery. Generally, a pouch-type secondary battery may include a plurality of negative electrode substrate tabs 110 and a plurality of positive electrode substrate tabs 130, and a pair of strip terminals 500 electrically connected to each of the negative electrode substrate tabs 110 and the positive electrode substrate tabs 130 (see FIG. 16). In some embodiments, the negative electrode substrate tabs 110 and the positive electrode substrate tabs 130 may have a larger width in the left-right direction (the X-axis direction shown in FIG. 8) than the strip terminals 500. The ultrasonic welding device 1000 may be used for welding between the plurality of negative electrode substrate tabs 110 and the plurality of positive electrode substrate tabs 130 and between the strip terminals 500 and the substrate tabs.

During a welding process, after the respective negative electrode substrate tabs 110 and positive electrode substrate tabs 130 are gathered into one, the plurality of negative electrode substrate tabs 110 may be welded to form one bundle. The plurality of positive electrode substrate tabs 130 may be welded to form one bundle. Welding of the negative electrode substrate tabs 110 and the positive electrode substrate tabs 130 may be referred to as primary welding. An area having undergone primary welding may be defined as a primary welding portion W1, which is shown in FIGS. 7 and 8. The primary welding portion W1 may appear in the same shape on the negative electrode substrate tab 110 and the positive electrode substrate tab 130. In some embodiments, primary welding may be performed avoiding the area where the strip terminals 500 to be described later are to be welded. Therefore, the primary welding portion W1 may be provided in an area other than the areas where the strip terminals 500 are welded. As shown in FIG. 7, the heads 1420 of the welding horn 1400 are placed so as to be spaced apart from each other, and welding may then be performed. As shown in FIG. 8, when the negative electrode substrate tab 110 and the positive electrode substrate tab 130 are viewed from above, the primary welding portion W1 may be spaced apart from each other in parallel. In some embodiments, the primary welding portion W1 may be provided at X-axis opposite ends of the negative electrode substrate tab 110 and the positive electrode substrate tab 130. In some embodiments, the primary welding portion W1 may be provided in an area spaced apart from a tab insulation part 150. The tab insulation part 150 may prevent a negative electrode active material from expanding and coming into contact with the positive electrode substrate tab 130 during charging and discharging of the secondary battery 10. The tab insulation part 150 may be provided with a PI coating or an insulating tape. If primary welding is performed on the negative electrode substrate tab 110 and the positive electrode substrate tab 130, secondary welding may be performed in a state in which the negative electrode substrate tabs 110 and the positive electrode substrate tabs 130 are aligned, respectively. Via primary welding, the adhesion between substrate tabs can be improved. Because unnecessary portions can be cut off when the substrate tabs are in close contact with each other, cutting uniformity of the substrate tabs can be improved.

Once primary welding is completed, as shown in FIG. 9, a pair of heads 1420 of a welding horn 1400 may move in a direction such that the heads 1420 come into close contact with each other. Thereafter, strip terminals 500 may be respectively welded to the negative electrode substrate tab 110 and the positive electrode substrate tab 130 having undergone the primary welding. This welding is performed one more time after the primary welding, and thus may be referred to as secondary welding. An area having undergone secondary welding may be defined as a secondary welding portion W2, which is shown in FIGS. 10 and 11. The secondary welding portion W2 may appear in the same shape on the pair of strip terminals 500. In some embodiments, secondary welding may be performed avoiding the area where the primary welding has been performed. Therefore, the secondary welding portion W2 may be provided in an area other than the areas where the negative electrode substrate tab 110 and the positive electrode substrate tab 130 are welded. As shown in FIG. 10, welding may be performed such that a pair of heads 1420 of a welding horn 1400 are in close contact with each other. As shown in FIG. 11, the secondary welding portion W2 appears on the strip terminals 500 spaced apart from the primary welding portion W1. Because the strip terminals 500 are welded to the uniform surfaces of the substrate tabs after the primary welding is completed, welding quality can be improved.

The welding portions shown in FIGS. 7 to 11 have geometries where the pair of heads 1420 of the welding horn 1400 move in the left-right direction based on FIGS. 3 to 6. That is, since the heads 1420 move in the X-axis direction of FIG. 8, the primary welding portion W1 and the secondary welding portion (W2) are provided along the X-axis direction. However, welding may also be performed while a pair of heads 1420 moving in a direction perpendicular to the X-axis direction. That is, the pair of heads 1420 may move in the Y-axis direction as shown in FIG. 12. Primary welding may be performed with the heads 1420 moving away from each other in the Y-axis direction. Accordingly, a primary welding portion (W3) may be spaced apart from each other in parallel along the Y-axis direction of FIG. 12. In some embodiments, the primary welding portion (W3) may be provided at Y-axis ends of a negative electrode substrate tab 110 and a positive electrode substrate tab 130 and in an area adjacent to the tab insulation part 150. Thereafter, secondary welding may be performed in a state in which the heads 1420 are in close contact with each other in the Y-axis direction. As shown in FIG. 13, a secondary welding portion W4 may be configured to be disposed between primary welding portions W3. A difference exists between the embodiments of FIGS. 11 and 13 in that the heads 1420, 1420a, and 1420b move in the directions perpendicular to one another. However, there is a common feature wherein the primary welding portions W1 and W3 and the secondary welding portions W2 and W4 do not overlap each other, and the secondary welding portions W2 and W4 are provided between the primary welding portions W1 and W3.

In some embodiments, because the heads 1420 are provided in pair, the primary welding portion W1 appears at two places, and the secondary welding portion W2 appears at two places (because two heads are in close contact with and welded to each other, the two primary welding portions W1 may appear to be one welding portion). In some embodiments, the heads 1420 may be provided in two pairs. As shown in FIG. 14, a primary welding portion W5 appears at four places, and a secondary welding portion W6 also appears at four places (because four heads are in close contact with and welded to one another, the four primary welding portions W5 may appear to be one welding portion). Although not shown, the heads 1420 may be formed as 3-4 pairs, etc. The size and number of heads 1420 may vary depending on the welding target or the size of welding portion required.

FIG. 16 is a perspective view showing a secondary battery 10 manufactured by an ultrasonic welding device according to embodiments of the present disclosure.

Referring to FIG. 16, the secondary battery 10 may be a pouch-type battery. However, this is only an example, and various types of secondary batteries on which ultrasonic welding is performed may all be included in the embodiments of the present disclosure. The secondary battery 10 may include an electrode assembly 100, a case 300, and a pair of strip terminals 500.

The electrode assembly 100 may be formed by winding or stacking a stack of a negative electrode plate (not shown), a separator (not shown), and a positive electrode plate (not shown), which can be formed in a thin or film shape. The electrode assembly 100 may be accommodated in the case 300 together with an electrolyte.

The negative electrode plate may include a negative electrode current collector including a metal foil, and a negative electrode active material layer coated on the negative electrode current collector. The negative electrode plate may further include a negative electrode uncoated portion on which the negative electrode active material is not coated. The negative electrode current collector may include a metal foil including copper, a copper alloy, nickel, or a nickel alloy. The negative electrode uncoated portion may be notched in a certain shape to become a negative electrode substrate tab 110. The negative electrode substrate tab 110 may be provided as a plurality of negative electrode substrate tabs. The strip terminals 500 may be electrically connected to the negative electrode substrate tabs 110. In some embodiments, the negative electrode substrate tabs 110 may first be welded together and then welded to the strip terminals 500. The ultrasonic welding device 1000 may be used for welding between the negative electrode substrate tabs 110 and welding between the negative electrode substrate tabs 110 and the strip terminals 500.

The negative electrode active material may include a material capable of reversibly intercalating/deintercalating lithium ions, lithium metal, an alloy of lithium metal, a material capable of being doped and undoped with lithium, or a transition metal oxide.

The material capable of reversibly intercalating/deintercalating lithium ions may be a carbon-based negative electrode active material, which may include, for example, crystalline carbon, amorphous carbon, or a combination thereof. Examples of the crystalline carbon may include graphite, such as natural graphite or artificial graphite, and examples of the amorphous carbon may include soft carbon, hard carbon, a pitch carbide, a meso-phase pitch carbide, sintered coke, and the like.

A Si-based negative electrode active material or a Sn-based negative electrode active material may be used as the material capable of being doped and undoped with lithium. The Si-based negative electrode active material may be silicon, a silicon-carbon composite, SiOₓ (0 < x < 2), a Si-based alloy, or a combination thereof.

The silicon-carbon composite may be a composite of silicon and amorphous carbon. According to one embodiment, the silicon-carbon composite may be in the form of a silicon particle and amorphous carbon coated on the surface of the silicon particle.

The silicon-carbon composite may further include crystalline carbon. For example, the silicon-carbon composite may include a core including crystalline carbon and silicon particle and an amorphous carbon coating layer on the surface of the core.

A negative electrode for a lithium secondary battery may include a current collector (e.g., a second substrate) and a negative electrode active material layer disposed on the current collector. The negative electrode active material layer may include a negative electrode active material and may further include a binder and/or a conductive material.

For example, the negative electrode active material layer may include about 90 wt % to about 99 wt % of a negative electrode active material, about 0.5 wt % to about 5 wt % of a binder, and about 0 wt % to about 5 wt % of a conductive material.

A non-aqueous binder, an aqueous binder, a dry binder, or a combination thereof may be used as the binder. When an aqueous binder is used as the negative electrode binder, a cellulose-based compound capable of imparting viscosity may be further included.

As the current collector, one selected from copper foil, nickel foil, stainless steel foil, titanium foil, nickel foam, copper foam, conductive metal-coated polymer substrate, and combinations thereof may be used.

The positive electrode plate may include a positive electrode collector including a metal foil, and a positive electrode active material layer coated on the positive electrode collector. The positive electrode plate may further include a positive electrode uncoated portion on which the positive electrode active material is not coated. The positive electrode collector may include a metal foil including aluminum or an aluminum alloy. The positive electrode uncoated portion may be notched in a certain shape to become a positive electrode substrate tab 130. The positive electrode substrate tab 130 may be provided as a plurality of positive electrode substrate tabs. The strip terminals 500 may be electrically connected to the positive electrode substrate tabs 130. In some embodiments, the positive electrode substrate tabs 130 are gathered into one and then welded to then be welded to the strip terminals 500. The ultrasonic welding device 1000 may be used for welding between the positive electrode substrate tabs 130 and welding between the positive electrode substrate tabs 130 and the strip terminals 500.

In some embodiments, as the positive electrode active material, a compound capable of reversibly intercalating/deintercalating lithium (e.g., a lithiated intercalation compound) may be used. For example, at least one of a composite oxide of lithium and a metal selected from cobalt, manganese, nickel, and combinations thereof may be used.

The composite oxide may be a lithium transition metal composite oxide, and examples thereof may include a lithium nickel-based oxide, a lithium cobalt-based oxide, a lithium manganese-based oxide, a lithium iron phosphate-based compound, a cobalt-free nickel-manganese-based oxide, or a combination thereof. As an example, a compound represented by any one of the following formulas may be used: LiₐA_{1-b}X_{b}O_{2-c}D_{c} (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}CO_{b}X_{c}O_{2-α}D_{α} (0.90≤a≤1.8, 0≤b≤0.5, 0≤c≤0.5, 0<α<2); LiₐNi_{1-b-c}Mn_{b}X_{c}O_{2-α}D_{α} (0.90≤a≤1.8, 0≤b≤0.5, 0≤c≤0.5, 0<α<2); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li_{(3-f)}Fe₂(PO₄)₃ (0≤f≤2); and LiₐFePO₄ (0.90≤a≤1.8). In the above formulas: A is Ni, Co, Mn, or a combination thereof; X is Al, Ni, Co, Mn, Cr, Fe, Mg, Sr, V, a rare earth element, or a combination thereof; D is O, F, S, P, or a combination thereof; G is Al, Cr, Mn, Fe, Mg, La, Ce, Sr, V, or a combination thereof; and L¹ is Mn, Al, or a combination thereof. A positive electrode for a lithium secondary battery may include a current collector (e.g., a first substrate) and a positive electrode active material layer formed on the current collector. The positive electrode active material layer may include a positive electrode active material and may further include a binder and/or a conductive material. The content of the positive electrode active material is in a range of about 90 wt% to about 99.5 wt% on the basis of 100 wt% of the positive electrode active material layer, and the content of the binder and the conductive material is in a range of about 0.5 wt% to about 5 wt%, respectively, on the basis of 100 wt% of the positive electrode active material layer.

The separator is positioned between the first electrode plate 111 and the second electrode plate 112 to prevent electrical shorts and enables the migration of transition metal ions.

The separator may include a porous substrate and a coating layer including an organic material, an inorganic material, or a combination thereof on one or both surfaces of the porous substrate The organic material may include a polyvinylidene fluoride-based polymer or a (meth)acrylic polymer. The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and combinations thereof but is not limited thereto. The organic material and the inorganic material may be mixed in one coating layer or may be in the form of a coating layer containing an organic material and a coating layer containing an inorganic material that are laminated on each other.

An electrolyte for a lithium secondary battery may include a non-aqueous organic solvent and a lithium salt. The non-aqueous organic solvent acts as a medium through which ions involved in the electrochemical reaction of the battery can move. The non-aqueous organic solvent may be a carbonate-based, an ester-based, an ether-based, a ketone-based, an alcohol-based solvent, an aprotic solvent, and may be used alone or in combination of two or more. In addition, when a carbonate-based solvent is used, a mixture of cyclic carbonate and chain carbonate may be used.

The case 300 forms the outer shape of the secondary battery 10 and accommodates the electrode assembly 100. The case 300 may be in the form of a pouch having a space formed on one surface to accommodate the electrode assembly 100. The case 300 may be referred to as a laminate exterior material, a case, a pouch exterior material, a pouch case, etc. The case 300 may include a recess 310 and a sealing portion 330. In some embodiments, the case 300 may be bent to make plate-shaped exterior materials face each other, and one side may then be subjected to pressing or drawing to form a recess 310. The sealing portion 330 may be provided on the outer periphery of the recess 310. The electrode assembly 100 can be accommodated in the recess 310, and the sealing portion 330 is sealed by heat fusion, etc. An insulating portion 510 can be positioned between the sealing portions 330, and parts of the strip terminals 500 may be exposed to the outside of the case 300.

Each of the strip terminals 500 may be electrically connected to the negative electrode substrate tab 110 and the positive electrode substrate tab 130 by ultrasonic welding, respectively. The insulating portion 510 may be provided on the strip terminals 500. The insulating portion 510 may be made of an insulating material, such as an insulating tape. The strip terminals 500 may be insulated from the case 300 by means of the insulating portion 510. In some embodiments, the insulating portion 510 may be placed on the sealing portion 330 of the case 300. In some embodiments, the width of the insulating portion 510 may be equal to or greater than the width of the sealing portion 330.

Because the secondary battery is welded by using the ultrasonic welding device of the present disclosure, the adhesion between substrate tabs can be improved. Because unnecessary parts can be cut in a state in which the substrate tabs are in close contact with each other, the cutting uniformity of the substrate tabs can be improved. Because the strip terminals 500 are welded on the uniform surfaces of the substrate tabs after primary welding is completed, welding quality can be improved.

Although the present disclosure has been described with reference to embodiments and drawings illustrating aspects thereof, the present disclosure is not limited thereto. Various modifications and variations can be made by a person skilled in the art to which the present disclosure belongs within the scope of the present disclosure.
The present disclosure additionally includes the following numbered embodiments:
1. An ultrasonic welding device for a secondary battery, comprising:
   an anvil configured to support a welding target; and
   a welding horn configured to be disposed on the welding target, the welding horn comprising:
      a body;
      a pair of heads disposed on one end of the body; and
      a plurality of welding knurls disposed on a surface of each of the pair of heads,
   wherein each of the pair of heads, upon primary welding of the welding target, is in a first position,
   wherein each of the pair of heads, upon secondary welding of the welding target, is in a second position, and
   wherein the first position and the second position are different from each other.
2. The ultrasonic welding device according to embodiment 1, wherein each of the heads is detachable or movable from the body.
3. The ultrasonic welding device according to embodiment 2, wherein a distance between each of the pair of heads in the first position is greater than that in the second position.
4. The ultrasonic welding device according to embodiment 3, wherein each of the pair heads includes a coupling part, and wherein the body comprises an insertion part.
5. The ultrasonic welding device according to one of embodiments 1 to 4, wherein the welding horn is provided in a pair, and each welding horn has one head.
6. The ultrasonic welding device according to embodiment 5, wherein a distance between each welding horn in the first position is greater than that in the second position.
7. The ultrasonic welding device according to one of embodiments 3 to 6, wherein a primary welding portion and a secondary welding portion do not overlap with each other.
8. The ultrasonic welding device according to embodiment 7, wherein the secondary welding portion is disposed between any two of the primary welding portion.
9. The ultrasonic welding device according to embodiment 8, wherein the primary welding portion and the secondary welding portion are each provided in an even number.
10. A method for manufacturing a secondary battery using an ultrasonic welding device according to one of embodiments 1 to 9, the method comprising:
   welding, using the ultrasonic welding device, a negative electrode substrate tab of a negative electrode plate of an electrode assembly of the secondary battery to a first strip terminal electrically connected to the negative electrode substrate tab, and a positive electrode substrate tab of a positive electrode plate of the electrode assembly to a second strip terminal electrically connected to the positive electrode substrate tab.
11. The method according to embodiment 10, wherein the welding comprises primary welding between a plurality of the negative electrode substrate tab and between a plurality of the positive electrode substrate tab.
12. The method according to embodiment 11, wherein the welding further comprises secondary welding between the primarily welded plurality of the negative electrode substrate tab and the first strip terminal and between the primarily welded plurality of the positive electrode substrate tab and the second strip terminal.
13. The method according to embodiment 12, wherein the primary welding is performed on the negative electrode substrate tab and the positive electrode substrate tab.
14. The method according to embodiment 13, wherein the secondary welding is performed on the first strip terminal welded to the negative electrode substrate tab and on the second strip terminal welded to the positive electrode substrate tabs.
15. The method according to embodiment 14, wherein an X-axis width of the negative electrode substrate tab and an X-axis width of the positive electrode substrate tab are each greater than an X-axis width of the first strip terminal or the second strip terminal.
16. The method according to embodiment 15, wherein a primary welding portion and a secondary welding portion do not overlap with each other.
17. The method according to embodiment 16, wherein the secondary welding portion is disposed between any two of the primary welding portion.
18. The method according to embodiment 17, wherein the primary welding portion and the secondary welding portion are arranged at both ends in an X-axis direction of the negative electrode substrate tab and the positive electrode substrate tab.
19. The method according to embodiment 17 or 18, wherein any two of the primary welding portion are spaced apart from each other in a Y-axis direction of the negative electrode substrate tab and the positive electrode substrate tab.
20. The method according to embodiment 19, wherein the primary welding portion and the secondary welding portion are each provided in an even number.

## Claims

1. An ultrasonic welding device for a secondary battery, comprising:
an anvil configured to support a welding target; and
a welding horn configured to be disposed on the welding target, the welding horn comprising:
a body;
a pair of heads disposed on one end of the body; and
a plurality of welding knurls disposed on a surface of each of the pair of heads,
wherein each of the pair of heads, upon primary welding of the welding target, is in a first position,
wherein each of the pair of heads, upon secondary welding of the welding target, is in a second position, and
wherein the first position and the second position are different from each other.

2. The ultrasonic welding device as claimed in claim 1, wherein each of the heads is detachable or movable from the body.

3. The ultrasonic welding device as claimed in claim 1 or 2, wherein a distance between each of the pair of heads in the first position is greater than that in the second position; preferably wherein each of the pair of heads includes a coupling part, and wherein the body comprises an insertion part.

4. The ultrasonic welding device according to one of claims 1 to 3, wherein the welding horn is provided in a pair, and each welding horn has one head;
preferably wherein a distance between each welding horn in the first position is greater than that in the second position.

5. The ultrasonic welding device according to one of claims 1 to 4, wherein a primary welding portion and a secondary welding portion do not overlap with each other.

6. The ultrasonic welding device as claimed in claim 5, wherein the secondary welding portion is disposed between any two of the primary welding portion; preferably wherein the primary welding portion and the secondary welding portion are each provided in an even number.

7. A method for manufacturing a secondary battery using an ultrasonic welding device as claimed in one of claims 1 to 6, the method comprising:
welding, using the ultrasonic welding device, a negative electrode substrate tab of a negative electrode plate of an electrode assembly of the secondary battery to a first strip terminal electrically connected to the negative electrode substrate tab, and a positive electrode substrate tab of a positive electrode plate of the electrode assembly to a second strip terminal electrically connected to the positive electrode substrate tab.

8. The method as claimed in claim 7, wherein the welding comprises primary welding between a plurality of the negative electrode substrate tab and between a plurality of the positive electrode substrate tab.

9. The method as claimed in claim 8, wherein the welding further comprises secondary welding between the primarily welded plurality of the negative electrode substrate tab and the first strip terminal and between the primarily welded plurality of the positive electrode substrate tab and the second strip terminal.

10. The method as claimed in claim 9, wherein the primary welding is performed on the negative electrode substrate tab and the positive electrode substrate tab.

11. The method according to claim 10, wherein the secondary welding is performed on the first strip terminal welded to the negative electrode substrate tab and on the second strip terminal welded to the positive electrode substrate tabs.

12. The method as claimed in claim 11, wherein an X-axis width of the negative electrode substrate tab and an X-axis width of the positive electrode substrate tab are each greater than an X-axis width of the first strip terminal or the second strip terminal.

13. The method according to one of claims 7 to 12 , wherein a primary welding portion and a secondary welding portion do not overlap with each other; preferably wherein the secondary welding portion is disposed between any two of the primary welding portion.

14. The method according to claim 13, wherein:
the primary welding portion and the secondary welding portion are arranged at both ends in an X-axis direction of the negative electrode substrate tab and the positive electrode substrate tab; and/or
any two of the primary welding portion are spaced apart from each other in a Y-axis direction of the negative electrode substrate tab and the positive electrode substrate tab.

15. The method as claimed in claim 14, wherein the primary welding portion and the secondary welding portion are each provided in an even number.
